# EUROPEAN PATENT SPECIFICATION

(11) **EP 2 065 620 B1**
(45) Date of publication and mention of the grant of the patent: **21.04.2010**
(21) Application number: 08015409.9
(22) Date of filing: 01.09.2008
(51) Int. Cl.: F16H 57/02

(54) **Motorcycle**
Motorrad
Motocyclette

(30) Priority: 30.11.2007 JP 2007310282
(43) Date of publication of application: 03.06.2009
(73) Proprietor: Honda Motor Co., Ltd., Tokyo 107-8556 (JP)
(72) Inventor: Watanabe, Satoru, Wako-shi Saitama 351-0193 (JP); Kurahashi, Masaki, Wako-shi Saitama 351-0193 (JP); Enjo, Sadamichi, Wako-shi Saitama 351-0193 (JP)
(74) Representative: Liska, Horst

(56) References cited:
- EP-A- 1 840 417
- JP-A- 59 034 065
- JP-A- 2002 205 633
- JP-A- 2007 263 229
- US-A1- 2006 032 690

## Description

### Technical Field

The present invention relates to a motorcycle in which a V-belt type continuously variable transmission is accommodated in a transmission case that is joined to a crankcase of an engine and extended to one side of a rear wheel, and a gear cover, which defines between the gear cover and the transmission case a gear chamber that accommodates a reduction gear mechanism interposed between the continuously variable transmission and the rear wheel, is coupled to the rear portion of the transmission case from the rear wheel side.

### Background Art

A scooter-type motorcycle is known, as disclosed in Patent Document No. JP-A-2002-205633, in which a wheel speed sensor is mounted to a gear cover that is fastened to a transmission case while defining between the gear cover and the transmission case a gear chamber that accommodates a reduction gear mechanism interposed between a continuously variable transmission and a rear wheel, and the wheel speed sensor is covered from above by a cover.

Document EP 1 840 417 discloses all the features of the preamble of claim 1.

### Problem to be Solved by the Invention

In the case of a structure in which the rear wheel is arranged in close proximity to the gear cover as in a scooter-type motorcycle, there is a possibility that foreign matter such as stones thrown up by the rear wheel may enter the space between the wheel hub of the rear wheel and the gear cover, generating noise.

The present invention has been made in view of the above-mentioned circumstance, and accordingly it is an object of the present invention to provide a motorcycle which minimizes intrusion of foreign matter into the space between the wheel hub of the rear wheel and the gear cover to thereby prevent generation of noise.

### Means for Solving the Problem

To achieve the above-mentioned object, an aspect of the invention in Claim 1 relates to a motorcycle in which a V-belt type continuously variable transmission is accommodated in a transmission case that is joined to a crankcase of an engine and extended to one side of a rear wheel, and a gear cover, which defines between the gear cover and the transmission case a gear chamber that accommodates a reduction gear mechanism interposed between the continuously variable transmission and the rear wheel, is coupled to a rear portion of the transmission case from the rear wheel side, wherein a wheel hub of the rear wheel is arranged in close proximity to the gear cover and has an inner tube portion through which an axle of the rear wheel is inserted, and an outer tube portion that coaxially surrounds the inner tube portion while defining between the outer tube portion and the inner tube portion an annular recess that opens to the gear cover side, and a protector, which covers a top portion of the gear cover and is mounted to at least one of the transmission case and the gear cover, is integrally provided with an extended portion that extends to the wheel hub side so as to be in close proximity to the outer tube portion, and a wheel speed sensor having a detection portion that extends through the protector and is in close proximity to and opposed to a pulsar ring fixed to the wheel hub is mounted to the gear cover so as to be covered by the protector,
**characterized in that** the pulsar ring closes an opening of the recess, and a projecting portion of the detection portion from the wheel speed sensor extending through the protector is covered from above by the extended portion.

In an aspect of the invention in Claim 2, in addition to the configuration according to the aspect of invention in Claim 1, at least a part of the extended portion is formed so as to substantially conform to a shape of the outer tube portion of the wheel hub.

In an aspect of the invention in Claim 3, in addition to the configuration according to the aspect of invention in Claim 1 or 2, wherein the projecting portion of the detection portion and the pulsar ring are protected by the extended portion.

In an aspect of the invention in Claim 4, in addition to the configuration according to the aspect of the invention in Claim 1 to 3, the gear cover integrally has a bulging portion that bulges to the rear wheel side so as to be inserted onto and support the axle of the rear wheel, the wheel speed sensor is mounted to the gear cover above the bulging portion, and a rear wall portion that is hung downward in rear of the detection portion of the wheel speed sensor is integrally joined to the extended portion of the protector.

It should be noted that a third rear wall portion 83q according to an embodiment corresponds to the rear wall portion according to the present invention.

### Effect of the Invention

According to the aspect of the invention in Claim 1, since a wheel hub of the rear wheel has an inner tube portion through which an axle of the rear wheel is inserted, and an outer tube portion that coaxially surrounds the inner tube portion while defining between the outer tube portion and the inner tube portion an annular recess that opens to the gear cover side, it is possible to make the wheel hub lightweight. Moreover, a protector that covers a top portion of the gear cover and is mounted to at least one of the transmission case and the gear cover is integrally provided with an extended portion, and the extended portion extends so as to be in close proximity to the outer tube portion. Therefore, foreign matter is less likely to intrude into the space between the wheel hub of the rear wheel and the gear cover, thereby making it possible to prevent generation of unpleasant noise.

Further the recess of the wheel hub is closed by a pulsar ring from the gear cover side, a wheel speed sensor having a detection portion that extends through the protector and is in close proximity to and opposed to the pulsar ring is mounted to the gear cover so as to be covered by the protector, and a projecting portion of the detection portion from the protector is covered from above by the extended portion.

Further, according to the aspect of the invention in Claim 2, at least a part of the extended portion of the protector conforms to a shape of the outer tube portion of the wheel hub, thereby making it possible to form the extended portion compact while more effectively preventing the intrusion of foreign matter into the recess of the wheel hub.

According to the aspect of the invention in Claim 3, the pulsar ring and the wheel speed sensor can be protected from foreign matter by the protector formed as a single component and having a simple structure.

Furthermore, according to the aspect of the invention in Claim 4, the wheel speed sensor is mounted to the gear cover above the bulging portion included in the gear cover, and a rear wall portion that is hung downward in rear of the wheel speed sensor is integrally joined to the extended portion of the protector. Therefore, the wheel speed sensor is protected from below by the bulging portion of the gear cover, and is protected from the rear by the rear wall portion, thereby making it possible to protect the wheel speed sensor more effectively.

### Brief Description of the Drawings

Fig. 1 is a left side view of a scooter type motorcycle.
Fig. 2 is a sectional view of a power unit and a rear wheel taken along the line 2-2 of Fig. 1.
Fig. 3 is an enlarged main-portion view of Fig. 2.
Fig. 4 is a sectional view taken along the line 4-4 of Fig. 3.
Fig. 5 is an exploded perspective view of the rear portion of a transmission case and a protector.
Fig. 6 is a sectional view taken along the line 6-6 of Fig. 4.

### Best Mode for Carrying Out the Invention

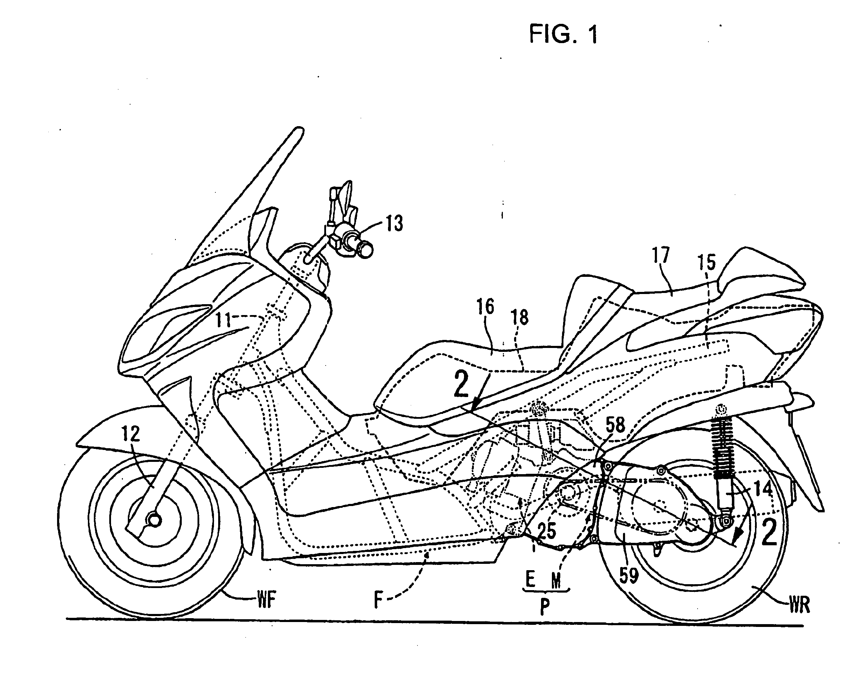

A mode of carrying out the present invention will be described below on the basis of an embodiment of the present invention shown in the attached drawings. Figs. 1 to 6 show an embodiment of the present invention.

First, in Fig. 1, a body frame F of this scooter-type motorcycle has a head pipe 11 at its front end. A front fork 12 to which a front wheel WF is journalled is steerably borne on the head pipe 11. A steering handlebar 13 is connected to the top portion of the front fork 12. Further, a power unit P, which includes an engine E and a power transmission device M provided between the engine E and a rear wheel WR, is borne on the body frame F so as to be vertically swingable. The rear wheel WR is journalled to the rear portion of the power unit P, and a rear cushion unit 14 is provided between the rear portion of the body frame F and the power unit P.

A front seat 16 and a rear seat 17 are arranged on a seat rail 15 provided in the rear portion of the body frame. The front end of the front seat 16 is hinged to the body frame F so as to be capable of vertical pivotal movement. An entrance provided at the front top surface of a storage box 18 arranged below the front and rear seats 16, 17 can be opened and closed by the front seat 16.

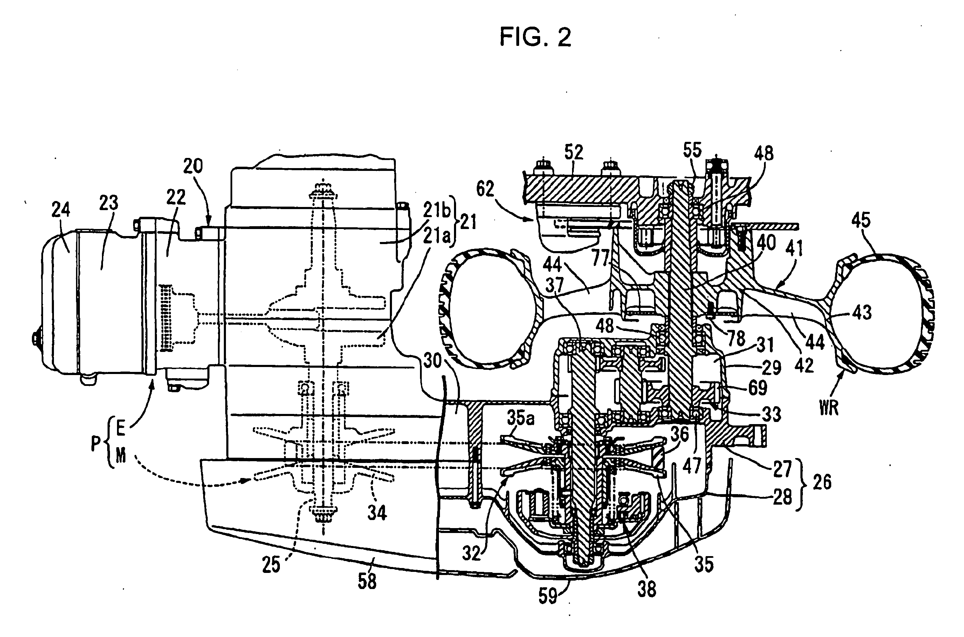

Referring to Fig. 2 as well, an engine body 20 of the engine E includes a crankcase 21 formed by coupling a left case half body 21a and a right case half body 21 b together, a cylinder block 22 that slopes upward towards the front and is coupled to the crankcase 21, a cylinder head 23 coupled to the cylinder block 22, and a head cover 24 coupled to the cylinder head 23. A crankshaft 25 that extends in the width direction of the body frame F is rotatably borne on the crankcase 21.

A transmission case 26, which is extended to the left of the rear wheel WR in a state facing forward in the traveling direction of the motorcycle, is connected to the crankcase 21. The transmission case 26 includes a case main body 27 that is joined integrally to the left case half body 21a of the crankcase 21 and extended rearward, and a case cover 28 that is fastened to the case main body 27 from the left side while defining a transmission chamber 30 between the case cover 28 and the case main body 27. A gear cover 29 that defines a gear chamber 31 between the gear cover 29 and the transmission case 26 is fastened to the rear portion of the case main body 27 in the transmission case 26 from the rear wheel WR side.

The substantially front half portion of the case cover 28 in the transmission case 26 is covered by a front side cover 58, and the substantially rear half portion of the case cover 28 is covered by a rear side cover 59. The front portion of the rear side cover 59 is covered by the rear portion of the front side cover 58. The front side cover 58 and the rear side cover 59 are fastened to the case cover 28.

The power transmission device M includes a V-belt type continuously variable transmission 32, and a reduction gear mechanism 33 provided between the continuously variable transmission 32 and the rear wheel WR. The continuously variable transmission 32 is accommodated in the transmission chamber 30, and is of a known structure including a drive pulley 34 coupled to the crankshaft 25 on the outside of the crankcase 21, a driven pulley 35 fitted via a centrifugal clutch 38 to a driven shaft 37 that has an axis parallel to the crankshaft 25 and is rotatably borne on the rear portion of the case main body 27 and the gear cover 29, and an endless V belt 36 that is wound around the drive pulley 34 and the driven pulley 35.

The drive pulley 34 operates such that the contact radius with the V belt 36 becomes larger as the rpm of the crankshaft 25 increases. On the other hand, the driven pulley 35 operates such that the contact radius with the V belt 36 becomes smaller as the contact radius of the V belt 36 with the drive pulley 34 becomes larger, thereby effecting continuous speed variation according to the rotation of the crankshaft 25 between the crankshaft 25 and the driven shaft 37.

The reduction gear mechanism 33 is provided between the driven shaft 37 and an axle 40 of the rear wheel WR and accommodated in the gear chamber 31. The rotational power of the driven shaft 37 in the continuously variable transmission 32 is reduced in speed by the reduction gear mechanism 33 before being transmitted to the axle 40 of the rear wheel WR.

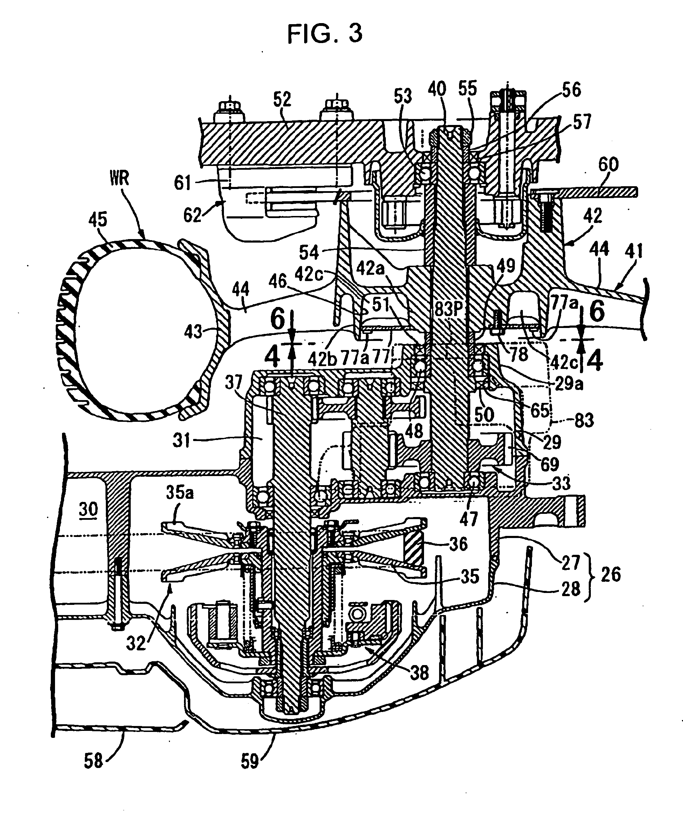

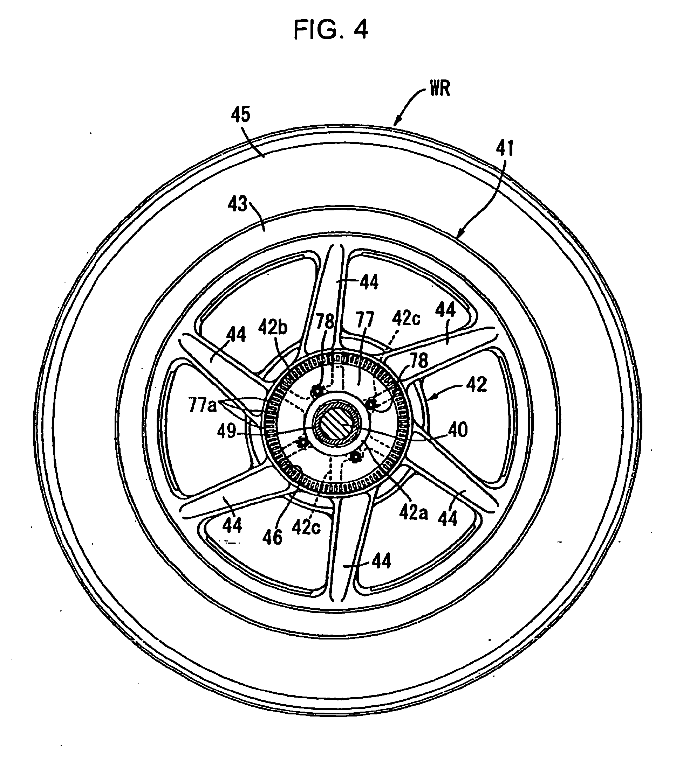

Referring to Fig. 3 and Fig. 4 as well, a wheel 41 of the rear wheel WR is formed by integrating together a wheel hub 42, a ring-shaped rim 43 that coaxially surrounds the wheel hub 42, and a plurality of spokes 44 connecting between the wheel hub 42 and the rim 43. A tire 45 is fitted on the outer circumference of the rim 43.

The wheel hub 42 is arranged in close proximity to the gear cover 29. On the side surface of the wheel hub 42 on the gear cover 29 side, there are provided an inner tube portion 42a through which the axle 40 of the rear wheel WR is inserted, an outer tube portion 42b that coaxially surrounds the inner tube portion 42a while defining between the outer tube portion 42b and the inner tube portion 42a an annular recess 46 that opens to the gear cover 29 side, and a plurality of ribs 42c provided inside the recess 46 and connecting between the inner tube portion 42a and the outer tube portion 42b. The axle 40 of the rear wheel WR is inserted through the inner tube portion 42a for spline-coupling.

The gear cover 29 integrally has a bulging portion 29a that bulges towards the wheel hub 42 side of the rear wheel WR. The axle 40 projecting to the transmission case 26 side from the inner tube portion 42a extends through an insertion hole 65 provided in the bulging potion 29a. One end portion of the axle 40 is borne on the case main body 27 of the transmission case 26 via a first ball bearing. A second ball bearing 48 is interposed between the outer circumference of the axle 40 and the inner circumference of the insertion hole 65. A cylindrical first sleeve 49 that surrounds the axle 40 is interposed between the inner race of the second ball bearing 48 and the inner tube portion 42a. An annular first seal member 50 interposed between the outer circumference of the axle 40 and the inner circumference of the insertion hole 65, and an annular second seal member 51 interposed between the inner circumference of the insertion hole 65 and the outer circumference of the first sleeve 49 are arranged so as to sandwitch the second ball bearing 48 from both sides. That is, one end portion of the axle 40 is journalled to the rear portion of the transmission case 26.

Arranged on the side opposite to the transmission case 26 and to the right of the rear wheel WR is a swing arm 52 whose front end portion is coupled to the right case half body 21 b in the crankcase 21 of the engine body 20. The other end portion of the axle 40 is rotatably borne on the swing arm 52 via a third ball bearing 53. Further, a cylindrical second sleeve 54 that surrounds the axle 40 is interposed between the inner race of the third ball bearing 53 and the wheel hub 42. A cylindrical third sleeve 56 that surrounds the axle 40 is interposed between a nut 55, which is brought into threaded engagement with the other end of the axle 40 projecting from the swing arm 52, and the inner race of the third ball bearing 53. An annular third seal member 57 is interposed between the third sleeve 56 and the swing arm 52. By fastening the nut 55, opposite end portions of the axle 40 are rotatably borne on the transmission case 26 and the swing arm 52, and the rear wheel WR is thus fixed to the axle 40.

On the side opposite to the transmission case 26, a brake disc 60 is fixed to the wheel hub 42. A caliper body 61, which constitutes a part of a disc brake 62 together with the brake disc 60, is supported on the swing arm 52.

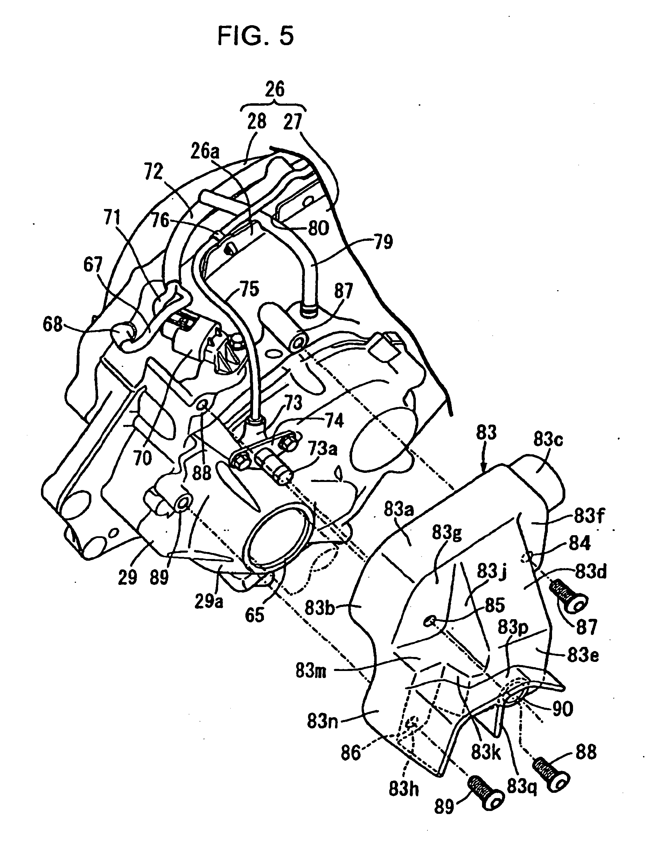

Referring to Fig. 5 as well, on a rear inner surface of the case main body 27 in the transmission case 26, a driven pulley rotation sensor (not shown) for detecting the rotational speed of the driven pulley 35 in the continuously variable transmission 32 for use in speed variation control is mounted so as to be opposed to a stationary pulley half body 35a (see Fig. 2 and Fig. 3) of the driven pulley 35. A wire 67 extending from this driven pulley rotation sensor extends through a grommet 68 and is led out to the outside. The grommet 68 is arranged so as to extend through the top wall of the rear portion of the case main body 27 near the mating surface with the rear portion of the case cover 28.

Further, a vehicle speed sensor 70 is mounted to the outer surface of the top wall of the case main body 27, with a detection portion at its distal end brought into close proximity with the teeth in the outer circumference of a gear 69 (see Fig. 2 and Fig. 3) that constitutes a part of the reduction gear mechanism 33 and is secured to the axle 40. The vehicle speed sensor 70 detects the rotational speed of the gear 69, that is, the vehicle speed. A wire 71 that extends from the vehicle speed sensor 70, and the wire 67 that extends from the driven pulley rotation sensor are bundled together as a gathered wire 72. The gathered wire 72 is extended forward along the upper left side surface of the transmission case 26.

A wheel speed sensor 73 for detecting the wheel speed of the rear wheel WR for use in anti-lock brake control is mounted above the bulging portion 29a to the gear cover 29 via a bracket 74. A detection portion 73a of the wheel speed sensor 73 is oriented towards the wheel hub 42 side of the rear wheel WR. A wire 75 extending from the wheel speed sensor 73 is extended to the left side above the transmission case 26, and after passing through the rear of a protrusion 26a, which protrudes from the top wall of the transmission case 26 so as to extend in the front-rear direction, the wire 75 is bent forward, and then extended forward along the left side surface of the protrusion 26a. Moreover, the wire 75 is held by a clamp 76 locked onto the protrusion 26a.

On the other hand, as shown in Fig. 2 to Fig. 4, a pulsar ring 77 shaped like a ring plate, which has on its outer circumference a plurality of tooth portions 77a to which the detection portion 73a of the wheel speed sensor 73 is brought into close proximity and opposed, is mounted to the wheel hub 42 of the rear wheel WR. The inner circumferential portion of the pulsar ring 77 is fastened to the inner tube portion 42a in the wheel hub 42 with a plurality of screw members 78. The annular recess 46 that opens to the gear cover 29 side and is formed in the wheel hub 42 is closed by the pulsar ring 77 from the gear cover 29 side.

One end portion of a breather pipe 79 that communicates with the interior of the gear chamber 31 is connected to the front top wall of the gear cover 29. The breather pipe 79 rises upward from the gear cover 29, further bends to the left side to be extended to the left side above the transmission case 26, and is brought into fitting engagement with a positioning cutout 80, which is provided in the protrusion 26a at the top portion of the transmission case 26, for positioning. Then, on the left side of the protrusion 26a, the breather pipe 79 goes under the wire 75, and passes above the gathered wire 72.

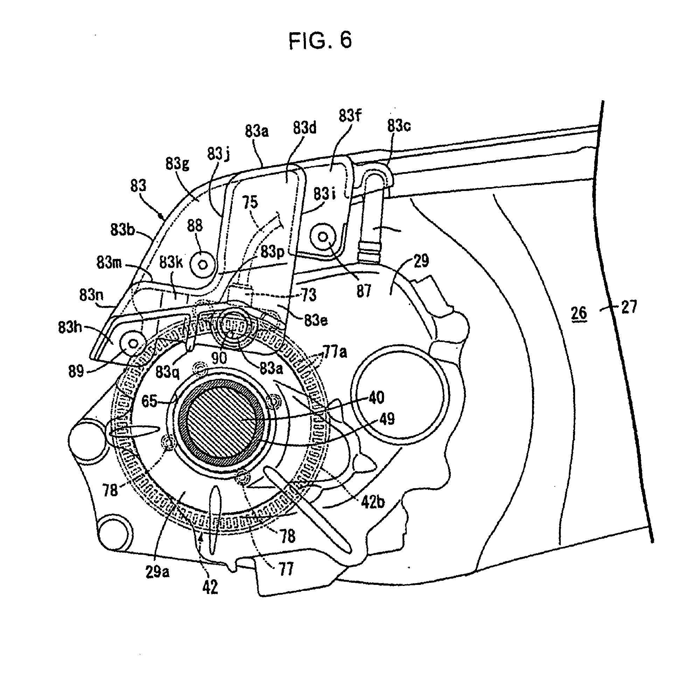

Referring to Fig. 6 as well, a protector 83, which covers the vehicle speed sensor 70 and the wheel speed sensor 73 from above and covers the top portion of the gear cover 29 so as to cover a part of the breather pipe 79 from above, is mounted to at least one of the transmission case 26 and the gear cover 29, in this embodiment, to both the transmission case 26 and the gear cover 29.

The protector 83 integrally has a top wall portion 83a that covers the vehicle speed sensor 70 from above and covers a part of the wire 75 extending from the wheel speed sensor 73 from above, a first rear wall portion 83b that extends downward from the rear end of the top wall portion 83a, an arcuate projection 83c that is curved so as to bulge upward and projects forward from the front end of the top wall portion 83a, an upper wall portion 83d that is joined to the intermediate portion of the top wall portion 83a in the front-rear direction so as to slope more downward with increasing proximity to the rear wheel WR, a lower wall portion 83e that extends downward from the bottom end of the upper wall portion 83d, a first mounting wall portion 83f located in front of the upper wall portion 83d and extending downward from the front portion of the top wall portion 83a, a second mounting wall portion 83g located in rear of the upper wall portion 83d and extending downward from the rear portion of the top wall portion 83a, a third mounting wall portion 83h that is arranged between the second mounting wall portion 83g and the lower wall portion 83e and extends vertically below the second mounting wall portion 83g, a first connecting wall portion 83i that connects the upper wall portion 83d and the first mounting wall portion 83f with each other, a second connecting wall portion 83j that connects the lower portions of the upper wall portion 83d and lower wall portion 83e and the second mounting wall portion 83g with each other, a third connecting wall portion 83k that connects the lower portion of the lower wall portion 83e and the third mounting wall portion 83h, a fourth connecting wall portion 83m that connects the lower wall portion 83e, the second mounting wall portion 83g, the third mounting wall portion 83h, and the third connecting wall portion 83k with each other, and a second rear wall portion 83n that is continuously flush with the lower portion of the first rear wall portion 83b and extends downward from the rear portions of the third mounting wall portion 83h and fourth connecting wall portion 83m.

The first, second, and third mounting wall portions 83f, 83g, 83h are provided with insertion holes 84, 85, 86. Mounting bosses 87, 88 respectively corresponding to the insertion holes 84, 85 are provided to the case main body 27 of the transmission case 26, and a mounting boss 89 corresponding to the insertion hole 86 is provided to the gear cover 29. When screw members 90, 91, 92, which are respectively inserted through the insertion holes 84 to 86, are brought into threaded engagement with the mounting bosses 87 to 89 and fastened, the protector 83 is mounted to the case main body 27 of the transmission case 26 and the gear cover 29.

With the protector 83 mounted to the transmission case 26 and the gear cover 29, the projection 83c is fitted to the portion of the breather pipe 79 which is bent to the left side above the gear cover 29, from diagonally above from the rear wheel WR side. Positioning of the breather pipe 79 in the left-right direction is effected by the projection 83c, and positioning in the front-rear direction is effected by the positioning cutout 80 of the protrusion 26a at the top portion of the transmission case 26.

A through hole 90, through which the distal end portion of the detection portion 73a in the wheel speed sensor 73 extends, is provided in the lower wall portion 83e of the protector 83. Thus, the detection portion 73a extends through the lower wall portion 83e of the protector 83 to be brought into close proximity to and opposed to the outer circumferential portion of the pulsar ring 77.

The protector 83 is integrally provided with an extended potion 83p that extends to the wheel hub 42 side so as to be in close proximity to the outer tube portion 42b of the wheel hub 42. The extended portion 83p projects from the lower wall portion 83e, the third connecting wall portion 83k, and the third mounting wall portion 83h so as to cover the projecting portion of the detection portion 73a of the wheel speed sensor 73 from the protector 83 from above. The rear portion of the extended portion 83p extends downward so as to be continuously flush with the second rear wall portion 83n.

Moreover, at least a part of the extended portion 83p, which in this embodiment is the portion of the extended portion 83p which covers the projecting portion of the detection portion 73a of the wheel speed sensor 73 from the protector 83 from above, that is, the front portion of the extended portion 83p is formed so as to substantially conform to the shape of the outer tube portion 42b of the wheel hub 42, as shown in Fig. 6.

Moreover, a third rear wall portion 83q that is hung downward in rear of the detection portion 73a of the wheel speed sensor 73 is integrally joined to the extended portion 83p.

Next, operation of this embodiment will be described. Since the wheel hub 42 of the rear wheel WR has the inner tube portion 42a through which the axle 40 of the rear wheel WR is inserted, and the outer tube portion 42b that coaxially surrounds the inner tube portion 42a while defining between the outer tube portion 42b and the inner tube portion 42a the annular recess 46 that opens to the gear cover 29 side, it is possible to make the wheel hub 42 lightweight. Moreover, the protector 83 that covers the top portion of the gear cover 29 and mounted to at least one of (in this embodiment, both of) the transmission case 26 and the gear cover 29 is integrally provided with the extended portion 83p that extends to the wheel hub 42 side so as to be in close proximity to the outer tube portion 42b, and the extended portion 83p extends so as to be in close proximity to the outer tube portion 42b of the wheel hub 42. Therefore, foreign matter is less likely to intrude into the space between the wheel hub 42 of the rear wheel WR and the gear cover 29, thereby making it possible to prevent generation of unpleasant noise.

Further, at least a part of the extended portion 83p, which in this embodiment is the front portion of the extended portion 83p is formed so as to substantially conform to the shape of the outer tube portion 42b of the wheel hub 42, thereby making it possible to form the extended portion 83p compact while more effectively preventing the intrusion of foreign matter into the recess 46 of the wheel hub 42.

Further, the pulsar ring 77 that closes the recess 46 from the gear cover 29 side is fixed to the wheel hub 42, the wheel speed sensor 73 having the detection portion 73a that extends through the protector 83 and is in close proximity to and opposed to the pulsar ring 77 is mounted to the gear cover 29 so as to be covered by the protector 83, and the projecting portion of the detection portion 73a from the protector 83 is covered by the extended portion 83p from above. Therefore, the pulsar ring 77 and the wheel speed sensor 73 can be protected from foreign matter by the protector 83 formed as a single component and having a simple structure.

Furthermore, the gear cover 29 integrally has the bulging portion 29a that bulges to the rear wheel WR side so as to be inserted onto and support the axle 40 of the rear wheel WR, the wheel speed sensor 73 is mounted to the gear cover 29 above the bulging portion 29a, and the third rear wall portion 83q that is hung downward in rear of the detection portion 73a of the wheel speed sensor 73 is integrally joined to the extended portion 83p of the protector 83. Therefore, the wheel speed sensor 73 is protected from below by the bulging portion 29a of the gear cover 29, and is protected from the rear by the third rear wall portion 83q, thereby making it possible to protect the wheel speed sensor 73 more effectively.

While an embodiment of the present invention has been described above, the present invention is not limited to the above-mentioned embodiment, but various design modifications are possible without departing from the scope of the present invention as defined in the claims.

The present invention is directed to minimize intrusion of foreign matter into the space between the wheel hub 42 of the rear wheel WR and the gear cover 29 to thereby prevent generation of noise, in a motorcycle in which a V-belt type continuously variable transmission 32 is accommodated in a transmission case 26, and a gear cover 29, which defines between the gear cover 29 and the transmission case 26 a gear chamber 31 that accommodates a reduction gear mechanism 33 interposed between the continuously variable transmission 32 and the rear wheel WR, is coupled to the rear portion of the transmission case 26 from the rear wheel side.

A wheel hub 42 of a rear wheel is arranged in close proximity to a gear cover 29 and has an inner tube portion 42a through which an axle 40 of the rear wheel is inserted, and an outer tube portion 42b that coaxially surrounds the inner tube portion 42a while defining between the outer tube portion 42b and the inner tube portion 42a an annular recess that opens to the gear cover 29 side, and a protector 83, which covers a top portion of the gear cover 29 and is mounted to at least one of a transmission case 26 and the gear cover 29, is integrally provided with an extended portion 83p that extends to the wheel hub 42 side so as to be in close proximity to the outer tube portion 42b.

## Claims

1. A motorcycle in which a V-belt type continuously variable transmission (32) is accommodated in a transmission case (26) that is joined to a crankcase (21) of an engine (E) and extended to one side of a rear wheel (WR), and a gear cover (29), which defines between the gear cover (29) and the transmission case (26) a gear chamber (31) that accommodates a reduction gear mechanism (33) interposed between the continuously variable transmission (32) and the rear wheel (WR), is coupled to a rear portion of the transmission case (26) from the rear wheel (WR) side,
wherein: a wheel hub (42) of the rear wheel (WR) is arranged in close proximity to the gear cover (29) and has an inner tube portion (42a) through which an axle (40) of the rear wheel (WR) is inserted, and an outer tube portion (42b) that coaxially surrounds the inner tube portion (42a) while defining between the outer tube portion (42b) and the inner tube portion (42a) an annular recess (46) that opens to the gear cover (29) side;
a protector (83), which covers a top portion of the gear cover (29) and is mounted to at least one of the transmission case (26) and the gear cover (29), is integrally provided with an extended portion (83p) that extends to the wheel hub (42) side so as to be in close proximity to the outer tube portion (42b); and
a wheel speed sensor (73) having a detection portion (73a) that extends through the protector (83) and is in close proximity to and opposed to a pulsar ring (77) fixed to the wheel hub (42) is mounted to the gear cover (26) so as to be covered by the protector (83), and
a projecting portion of the detection portion (73a) from the wheel speed sensor (73) extending through the protector (83) is covered from above by the extended portion (83p),
**characterized in that**
the pulsar ring (77) closes the annular recess (46) from the gear cover side.

2. The motorcycle according to Claim 1, wherein at least a part of the extended portion (83p) is formed so as to substantially conform to a shape of the outer tube portion (42b) of the wheel hub (42).

3. The motorcycle according to Claim 1 or 2,
wherein the projecting portion of the detection portion (73a) and the pulsar ring (77) are protected by the extended portion (83p).

4. The motorcycle according to any one of Claims 1 to 3,
wherein the gear cover (29) integrally has a bulging portion (29a) that bulges to the rear wheel (WR) side so as to be inserted onto and support the axle (40) of the rear wheel (WR),
the wheel speed sensor (73) is mounted to the gear cover (29) above the bulging portion (29a), and
a rear wall portion (83q) that is hung downward in rear of the detection portion (73a) of the wheel speed sensor (73) is integrally joined to the extended portion (83p) of the protector (83).

## Patentansprüche

1. Kraftrad, bei dem ein stufenlos verstellbares Getriebe (32) vom Keilriementyp in einem Getriebegehäuse (26) untergebracht ist, welches mit einem Kurbelgehäuse (21) eines Motors (E) verbunden ist und sich zu einer Seite eines Hinterrads (WR) erstreckt, und eine Getriebeabdeckung (29), welche zwischen der Getriebeabdeckung (29) und dem Getriebegehäuse (26) eine Getriebekammer (31) definiert, welche einen Untersetzungsgetriebemechanismus (33) aufnimmt, welcher zwischen dem stufenlos verstellbaren Getriebe (32) und dem Hinterrad (WR) eingefügt ist, mit einem hinteren Abschnitt des Getriebegehäuses (26) von der Seite des Hinterrads (WR) gekoppelt ist,
wobei: eine Radnabe (42) des Hinterrads (WR) in unmittelbarer Nähe zu der Getriebeabdeckung (29) angeordnet ist und einen inneren Rohrabschnitt (42a) hat, durch welchen eine Achse (40) des Hinterrads (WR) eingesetzt ist, und einen äußeren Rohrabschnitt (42b) hat, welcher den inneren Rohrabschnitt (42a) koaxial umgibt, während er zwischen dem äußeren Rohrabschnitt (42b) und dem inneren Rohrabschnitt (42a) eine ringförmige Ausnehmung (46) definiert, welche zur Seite der Getriebeabdeckung (29) öffnet;
ein Schutz (83), welcher einen oberen Abschnitt der Getriebeabdeckung (29) abdeckt und an wenigstens einem von dem Getriebegehäuse (26) und der Getriebeabdeckung (29) montiert ist, integral mit einem verlängerten Abschnitt (83p) versehen ist, welcher sich derart zur Seite der Radnabe (42) erstreckt, dass er in unmittelbarer Nähe zu dem äußeren Rohrabschnitt (42b) ist; und
ein Radgeschwindigkeitssensor (73), welcher einen Erfassungsabschnitt (73a) hat, welcher sich durch den Schutz (83) erstreckt und in unmittelbarer Nähe zu und gegenüber einem Impulsgeberring (77) ist, welcher an der Radnabe (42) befestigt ist, an der Getriebeabdeckung (26) derart angebracht ist, dass er durch den Schutz (83) abgedeckt ist, und
ein vorstehender Abschnitt von dem Erfassungsabschnitt (73a) von dem Radgeschwindigkeitssensor (73), welcher sich durch den Schutz (83) erstreckt, von oben durch den verlängerten Abschnitt (83p) abgedeckt ist, **dadurch gekennzeichnet, dass**
der Impulsgeberring (77) die ringförmige Ausnehmung (46) von der Seite der Getriebeabdeckung her abdeckt.

2. Kraftrad nach Anspruch 1, wobei wenigstens ein Teil von dem verlängerten Abschnitt (83p) derart ausgebildet ist, dass er im Wesentlichen der Form des äußeren Rohrabschnitts (42b) der Radnabe (42) entspricht.

3. Kraftrad nach Anspruch 1 oder 2,
wobei der vorstehende Abschnitt von dem Erfassungsabschnitt (73a) und der Impulsgeberring (77) durch den verlängerten Abschnitt (83p) geschützt sind.

4. Kraftrad nach einem der Ansprüche 1 bis 3,
wobei die Getriebeabdeckung (29) integral einen Ausbauchungsabschnitt (29a) hat, welcher sich zur Seite des Hinterrads (WR) ausbaucht, um auf die Achse (40) des Hinterrads (WR) gesetzt zu sein und dieselbe zu lagern,
der Radgeschwindigkeitssensor (73) an der Getriebeabdeckung (29) oberhalb des Ausbauchungsabschnitts (29a) montiert ist, und
ein hinterer Wandabschnitt (83q), welcher hinter dem Erfassungsabschnitt (73a) von dem Radgeschwindigkeitssensor (73) nach unten herunter hängt, integral mit dem verlängerten Abschnitt (83p) von dem Schutz (83) verbunden ist.

## Revendications

1. Motocycle dans lequel une transmission à variation continue à courroie trapézoïdale (32) est logée dans un carter de boîte de vitesses (26) qui est joint à un carter de moteur (21) d'un moteur (E) et étendu vers un côté d'une roue arrière (WR) et un couvercle (29), qui définit entre le couvercle (29) et le carter de boîte de vitesses (26) une chambre d'engrenage (31) qui loge un mécanisme d'engrenage de réduction (33) interposé entre la transmission à variation continue (32) et la roue arrière (WR), est couplé à une partie arrière du carter de boîte de vitesses (26) à partir du côté de la roue arrière (WR),
où : un moyeu de roue (42) de la roue arrière (WR) est agencé à proximité étroite du couvercle (29) et comporte une partie de tube interne (42a) à travers laquelle un essieu (40) de la roue arrière (WR) est inséré, et une partie de tube externe (42b) qui entoure de manière coaxiale la partie de tube interne (42a) tout en définissant entre la partie de tube externe (42b) et la partie de tube interne (42a) un évidement annulaire (46) qui s'ouvre sur le côté du couvercle (29) ;
une protection (83), qui couvre une partie supérieure du couvercle (29) et est montée sur au moins l'un du carter de boîte de vitesses (26) et du couvercle (29), est disposée solidairement avec une partie étendue (83p) qui s'étend vers le côté de moyeu de roue (42) de sorte à être à proximité étroite de la partie de tube externe (42b) ; et
un capteur de vitesse de roue (73) comportant une partie de détection (73a) qui s'étend à travers la protection (83) et se trouve à proximité étroite et à l'opposé d'une bague à impulsion (77) fixée au moyeu de roue (42) est monté sur le couvercle (26) de sorte à être couvert par la protection (83),
et une partie en saillie de la partie de détection (73a) à partir du capteur de vitesse de roue (73) en extension à travers la protection (83) est couverte du dessus par la partie étendue (83p), **caractérisée en ce que**
la bague à impulsion (77) ferme l'évidement annulaire (46) à partir du côté de couvercle.

2. Motocycle selon la revendication 1, dans lequel au moins une partie de la partie étendue (83p) est formée de sorte à épouser sensiblement une forme de la partie de tube externe (42b) du moyeu de roue (42).

3. Motocycle selon la revendication 1 ou 2,
dans lequel la partie en saillie de la partie de détection (73a) et la bague à impulsion (77) sont protégées par la partie étendue (83p).

4. Motocycle selon l'une quelconque des revendications 1 à 3,
dans lequel le couvercle (29) comporte solidairement une partie renflée (29a) qui forme un bourrelet vers le côté de roue arrière (WR) de sorte à être insérée sur l'essieu (40) de la roue arrière (WR) et à supporter celui-ci,
le capteur de vitesse de roue (73) est monté sur le couvercle (29) au-dessus de la partie renflée (29a), et
une partie de paroi arrière (83q) qui est suspendue vers le bas à l'arrière de la partie de détection (73a) du capteur de vitesse de roue (73) est jointe solidairement à la partie étendue (83p) de la protection (83).
